# EUROPÄISCHE PATENTANMELDUNG

(11) **EP 3 892 599 A1**
(43) Veröffentlichungstag der Anmeldung: **13.10.2021**
(21) Anmeldenummer: 20168180.6
(22) Anmeldetag: 06.04.2020
(51) Int. Cl.: C04B 26/18, A47K 3/02, A47K 3/40, E03C 1/14

(54) **SANITÄRGEGENSTAND**

(71) Anmelder: Duravit Aktiengesellschaft, 78132 Hornberg (DE)
(72) Erfinder: STAMMEL, Thomas, 78132 Hornberg (DE)
(74) Vertreter: Lindner Blaumeier Patent- und Rechtsanwälte

(57) **Zusammenfassung**

Sanitärgegenstand, mit einem Tragkörper (2) und einer zumindest abschnittsweise auf diesen aufgebrachten, die Außenseite des Sanitärgegenstands bildende Außenbeschichtung (3), wobei der Tragkörper (2) aus einem ersten Verbundwerkstoff (4) aus einer gefüllten polymeren Bindemittelmatrix (6) enthaltend wenigstens einen Füllstoff in Form von Hohlglaskugeln (7) und die Außenbeschichtung (3) aus einem zweiten Verbundwerkstoff (5) aus einer mit wenigstens einem Füllstoff gefüllten polymeren Bindemittelmatrix (10), die keine Hohlglaskugeln enthält, besteht.

## Beschreibung

Die Erfindung betrifft einen Sanitärgegenstand.

Sanitärgegenstände sind in unterschiedlichsten Formen bekannt, lediglich beispielhaft sind Badewannen, Duschwannen und- tassen, Waschbecken oder WCs zu nennen. Neben der Möglichkeit, einen Sanitärgegenstand aus einer Keramik herzustellen, ist es auch bekannt, Sanitärgegenstände aus einem Verbundwerkstoff aus einer gefüllten polymeren Bindemittelmatrix herzustellen. Insbesondere im Badewannen- und Duschwannen- bzw. Duschtassenbereich findet diese Technik Anwendung. Ein solcher Verbundwerkstoff, der mitunter auch "Solid Surface" genannt wird, besteht aus einem polymeren Bindemittel, einem Härter sowie organischen und/oder anorganischen Additiven, die für die jeweiligen gewünschten optischen und haptischen Eigenschaften genutzt werden.

Als Bindemittel werden überwiegend Polyesterharze (UP-Harze) und mit Acrylmonomeren modifizierte Polyesterharze verwendet, wobei auch reine AcrylHarze verwendet werden können. Für die Polymerisierung, also die Vernetzung der Bindemittelmatrix, wird zumeist Metylethylketonperoxid (MEKP) verwendet.

Zur Einstellung oder Variation der optischen und haptischen Eigenschaften werden verschiedene organische/anorganische Additive zugegeben. Beispielsweise werden Füllstoffe zugegeben, z. B. Aluminiumtrihydrat (ATH), also ein Flammschutzmittel, oder Quarze, Dolomit, Glas, Hohlglaskugeln, polymerisierte Kunststoffchips etc., wobei die Füllstoffe in der Regel pulverförmig bzw. feingemahlen zugegeben werden. Bei den Farben wird im Sanitärbereich überwiegend das anorganische Pigment Titandioxid (TiO₂) als Pulver oder in einer niederviskosen Harzlösung respektive Paste gelöst zugegeben, wobei aber auch andere Pigmente auf anorganischer oder organischer Basis verwendet werden können, je nach gewünschter Farbe.

Die Verwendung eines solchen Verbundwerkstoffs respektive eines solchen "Solid Surface" Produkts sind vielfältig. Zum einen zeichnen sich derart hergestellte Gegenstände durch ihre matte Optik und eine warme bzw. sanfte Haptik aus. Da das Ausgangsmaterial fluid ist, können, anders als im Vergleich zur Herstellung von Sanitärprodukten aus tiefgezogenen Acrylplatten, komplexere Geometrien hergestellt werden. Durch den Einsatz geeigneter, als Flammschutz dienender Füllstoffe oder nicht brennbarer Füllstoffe kann der hergestellt Sanitärgegenstand als "schwer entflammbar" oder "nicht brennbar" eingestuft werden. Schließlich bewirkt die Durchfärbung des Verbundwerkstoffs durch den gesamten Produktquerschnitt, dass feine Kratzer nicht sichtbar sind.

Häufig werden als Füllstoff Hohlglaskugeln zugegeben, um das Produktgewicht zu reduzieren, wobei die Reduktion abhängig vom Füllgrad, also der Menge an zugegebenen Hohlglaskugeln ist. Auch kann durch Zugabe der Hohlglaskugeln eine Kostenreduktion erfolgen, da die Hohlglaskugeln andere, teurere Füllstoffe ersetzen. Aus einem solchen, Hohlglaskugeln enthaltenden Verbundwerkstoff können daher vielfältige Produkte hergestellt werden, die verschiedenartige, auch komplexe Geometrien aufweisen, gleichwohl aber mit reduziertem Produktgewicht und zu reduzierten Kosten.

Die Verwendung eines solchen, mit Hohlglaskugeln gefüllten Verbundwerkstoffs ist auch im Sanitärbereich möglich. Dort stellt sich jedoch das Problem, dass ein mit einer Form gegossener Sanitärgegenstand nach dem Aushärten mitunter oberflächlich nachbearbeitet werden muss, was üblicherweise durch Schleifen erfolgt. Dies kann dazu führen, dass die in der Bindemittelmatrix gebundenen Hohlglaskugeln eine oberflächliche Mikroporosität generieren, wenn sie während der mechanischen Nachbearbeitung quasi aufgeschliffen werden. Diese Mikroporosität kann dazu führen, dass sich in den Poren Schmutz ablagern kann, was zu einem erhöhten Reinigungsaufwand führen kann.

Der Erfindung liegt damit das Problem zugrunde, einen dem gegenüber verbesserten Sanitärgegenstand anzugeben.

Zur Lösung dieses Problems ist erfindungsgemäß ein Sanitärgegenstand vorgesehen, mit einem Tragkörper und einer zumindest abschnittsweise auf diesen aufgebrachten, die Außenseite des Sanitärgegenstands bildenden Außenbeschichtung, wobei der Tragkörper aus einem ersten Verbundwerkstoff aus einer gefüllten polymeren Bindemittelmatrix enthaltend wenigstens einen Füllstoff in Form von Hohlglaskugeln und die Außenbeschichtung aus einem zweiten Verbundwerkstoff aus einer mit wenigstens einem Füllstoff gefüllten polymeren Bindemittelmatrix, die keine Hohlglaskugeln enthält, besteht.

Der erfindungsgemäße Sanitärgegenstand zeichnet sich dadurch aus, dass er einerseits die Vorteile eines mit Hohlglaskugeln gefüllten Verbundwerkstoffs, aus dem der Tragkörper gebildet ist, zeigt, andererseits aber die aus der Füllung mit den Hohlglaskugeln im Hinblick auf ein mechanisches Nachbearbeiten resultierenden Nachteile nicht aufweist. Erfindungsgemäß besteht der Sanitärgegenstand aus dem eigentlichen Tragkörper, der die Form definiert sowie auch die mechanischen Eigenschaften. Dieser Tragkörper ist aus einem ersten Verbundwerkstoff gebildet, bestehend aus einer gefüllten polymeren Bindemittelmatrix, in der wenigstens ein Füllstoff in Form von Hohlglaskugeln eingebracht ist. Das heißt, dass der Tragkörper aufgrund der Hohlglaskugelfüllung entsprechend gewichtsreduziert ist, wie er auch kostengünstig hergestellt werden kann. Auf diesen Tragkörper ist erfindungsgemäß eine Außenbeschichtung aufgebracht, das heißt, dass die eine oder die mehreren Tragkörperflächen, die am fertigen Sanitärgegenstand Sichtflächen bilden, mit der Außenbeschichtung belegt sind. Diese im Vergleich zur Dicke des Tragkörpers sehr dünne Außenbeschichtung ist aus einem zweiten Verbundwerkstoff, ebenfalls bestehend aus einer polymeren Bindemittelmatrix, die mit wenigstens einem Füllstoff gefüllt ist, die aber keine Hohlglaskugeln enthält. Diese Außenbeschichtung definiert die Oberfläche respektive Außenseite des Sanitärgegenstands.

Es besteht nun also die Möglichkeit, den Tragkörper nach dessen Herstellung entsprechend oberflächlich zu behandeln, also nachzubearbeiten und beispielsweise zu schleifen, sodass eine sehr glatte Oberfläche erhalten werden kann, an der durchaus auch aufgrund des Anschleifens der Hohlglaskugeln eine entsprechende Mikroporosität gegeben ist. Diese Porenstruktur wird jedoch durch das Aufbringen der Außenbeschichtung vollständig geschlossen. Die Außenbeschichtung ihrerseits ist nicht unbedingt nachzubearbeiten, da sie wie ausgeführt äußerst dünn ist und ohnehin auf eine bereits nachbearbeitete Tragkörperoberfläche aufgebracht wird. Da diese Außenbeschichtung respektive der zweite Verbundwerkstoff keine Hohlglaskugeln enthält, ergeben sich keine aus dem Vorhandensein solcher Hohlglaskugeln resultierenden Probleme am fertigen Sanitärgegenstand.

Das heißt, dass der erfindungsgemäße Sanitärgegenstand einerseits die Vorteile eines ersten, mit Hohlglaskugeln gefüllten Verbundwerkstoffs zeigt, andererseits aber auch aufgrund der Außenbeschichtung eine geschlossene, keine Mikroporosität aufweisende Oberfläche. Diese Oberfläche ist sehr einfach zu reinigen und neigt, da eben keine Mikroporosität gegeben ist, nicht zu einer oberflächlichen Schmutzablagerung. Darüber hinaus bleiben die hervorragenden haptischen und optischen Eigenschaften, die ein solcher Verbundwerkstoff auf Polymerbasis bietet, am erfindungsgemäßen Sanitärgegenstand erhalten, da wie ausgeführt auch der zweite Verbundwerkstoff ein solcher aus einer gefüllten polymeren Bindemittelmatrix ist, der die entsprechenden haptischen und optischen Eigenschaften zeigt.

Gemäß einer zweckmäßigen Weiterbildung der Erfindung kann vorgesehen sein, dass die Bestandteile des ersten Verbundwerkstoffs und die Bestandteile des zweiten Verbundwerkstoffs, bis auf die Hohlglaskugeln, die gleichen sind. Das heißt, dass letztlich beide Verbundwerkstoffe aus den identischen Bestandteilen respektive Komponenten bestehen, außer dass im ersten Verbundwerkstoff als Füllstoff Hohlglaskugeln enthalten sind, während solche im zweiten Verbundwerkstoff fehlen. Dies wirkt sich vorteilhaft auf die Herstellung des Sanitärgegenstands aus, da beide Ausgangsmassen, aus denen der Tragkörper einerseits und die Außenbeschichtung andererseits hergestellt werden, aus denselben Stoffen hergestellt werden können.

Alternativ dazu besteht aber natürlich auch die Möglichkeit, dass sich die Bestandteile des ersten Verbundwerkstoffs und die Bestandteile des zweiten Verbundwerkstoffs, neben den Hohlglaskugeln, zumindest zum Teil unterscheiden. Diese Alternative sieht demzufolge unterschiedliche Versätze für die beiden Verbundwerkstoffe vor. Dies kann dann zweckmäßig sein, wenn beispielsweise der erste Verbundwerkstoff zur Einstellung bestimmter mechanischer Eigenschaften besondere Füllstoffe benötigt, die in der Außenbeschichtung nicht zwingend enthalten sein müssen.

Der zweite Verbundwerkstoff, der wie beschrieben mindestens einen Füllstoff aufweist, enthält als einen solchen wenigstens ein Flammschutzmittel, insbesondere Aluminiumtrihydrat (ATH). Hierüber wird sichergestellt, dass auch der zweite Verbundwerkstoff dementsprechend schwer entflammbar ist, was natürlich auch für den ersten Verbundwerkstoff gilt, der ebenfalls als zusätzlichen Füllstoff zu den Hohlglaskugeln ein solches Flammschutzmittel, insbesondere ATH, enthält.

Weiterhin ist es zweckmäßig, wenn der zweite Verbundwerkstoff wenigstens ein Farbadditiv, insbesondere ein organisches Pigment oder ein anorganisches Pigment enthält. Hierüber wird auch der zweite Verbundwerkstoff entsprechend eingefärbt, bevorzugt natürlich wie auch der erste Verbundwerkstoff, sodass eine vollständige Durchfärbung über den gesamten Querschnitt des Sanitärgegenstands gegeben ist. Ein solches anorganisches Pigment ist bevorzugt Titandioxid, das die Außenbeschichtung, also den zweiten Verbundwerkstoff, entsprechend weiß färbt, wie für Sanitärgegenstände zumeist üblich.

In einer konkretisierten Erfindungsausgestaltung kann der zweite Verbundwerkstoff enthalten (in Gew.-% des ausgehärteten Verbundwerkstoffs):
Polymeres Bindemittel: 44,0 - 65,0
Flammschutzmittel: 35,0 - 55,0
Farbadditiv: 1,0 - 5,0

Dies sind die drei Mindestkomponenten des zweiten Verbundwerkstoffs. Ihre Gewichtsprozent-Summe ergibt stets 100 Gew.-%, wenn keine zusätzlichen Bestandteile wie zusätzliche Füllstoffe und ähnliches enthalten sind.

Der erste Verbundwerkstoff kann unterschiedlicher Natur sein. So kann es sich bei dem ersten Verbundwerkstoff um einen bereits bekannten Verbundwerkstoff auf Basis eines polymeren Bindemittels handeln, wie er bereits zur Herstellung von Sanitärgegenständen verwendet wird. Ein solcher erster Verbundwerkstoff enthält (in Gew.-% des ausgehärteten Verbundwerkstoffs):
Polymeres Bindemittel: 34,0 - 49,0
Flammschutzmittel + Quarz: 47,0 - 62,0
Hohlglaskugeln: 1,0 - 5,1
Farbadditiv: 2,4 - 2,8

Auch hier ergibt natürlich die Summe der jeweiligen Bestandteile 100 Gew.-%, wenn nur diese vier vorgesehen sind. Ist noch ein weiterer Füllstoff oder dergleichen enthalten, so variieren die Bestandteile der genannten Stoffe entsprechend innerhalb der angewählten Intervalle, wobei natürlich auch dann die Summe stets 100 Gew.-% ergibt.

Alternativ zu dem vorstehend beschriebenen ersten Verbundwerkstoff, bei dem als Füllstoff neben den Hohlglaskugeln ein Flammschutzmittel und Quarz vorgesehen sind, ist es auch denkbar, neben den Hohlglaskugeln als Füllstoff ein Metallcarbonat, insbesondere Calciumcarbonat einzubringen. Dieses Metallcarbonat kann den Quarz und gegebenenfalls auch das Flammschutzmittel in Form von ATH ersetzen, und gegebenenfalls auch das Farbadditiv, wenn ein solches nicht benötigt wird.

Ein solcher erster Verbundwerkstoff enthält daher in weiterer Erfindungsausgestaltung (in Gew.-% des ausgehärteten Verbundwerkstoffs):
Polymeres Bindemittel: 90,0 - 50,0
Metallcarbonat: 45,0 - 70,0
Hohlglaskugeln: 0,5 - 9,5

Auch hier ergibt die Summe der verwendeten Bestandteile stets 100 Gew.-%, es handelt sich also auch hier um eine Mindestzusammensetzung, wobei die Bestandteilsmengen innerhalb der angegebenen Intervalle entsprechend variieren, wenn ein zusätzlicher Füllstoff oder ein Farbpigment hinzugegeben wird.

Der das Metallcarbonat enthaltende, erste Verbundwerkstoff kann weiterhin als Füllstoff wenigstens ein Flammschutzmittel, insbesondere Aluminiumtrihydrat (ATH) zu maximal 21 Gew.-% enthalten. Das heißt, dass zusätzlich zu dem Metallcarbonat respektive dem Calciumcarbonat und den Hohlglaskugeln noch das Flammschutzmittel respektive ATH zugegeben wird.

Weiterhin kann ein Farbadditiv, insbesondere ein organisches Pigment oder ein anorganisches Pigment, zu maximal 5,0 Gew.-% im ersten Verbundwerkstoff enthaltend das Metallcarbonat zugegeben sein, wobei hier als anorganisches Pigment bevorzugt wieder Titandioxid verwendet wird.

Vorstehend wurden der erste und der zweite Verbundwerkstoff in ihren quasi grundlegenden, jedoch zum Teil unterschiedlichen Bestandteilen spezifiziert. Zusätzlich zu den vorstehend bereits beschriebenen Bestandteilen ist es jedoch auch möglich, weitere Zuschlagsstoffe zuzugeben.

So besteht die Möglichkeit, dass der erste und/oder zweite Verbundwerkstoff weiterhin als Füllstoff Quarz enthält, wobei der erste Verbundwerkstoff Quarz zu maximal 10,1 Gew.-% und der zweite Verbundwerkstoff Quarz zu maximal 5,7 Gew.-% enthält.

Alternativ oder zusätzlich hierzu kann vorgesehen sein, dass der erste und/oder zweite Verbundwerkstoff weiterhin als Füllstoff Dolomit enthält, wobei der erste und der zweite Verbundwerkstoff Dolomit jeweils zu maximal 7,3 Gew.-% enthalten.

Schließlich kann vorgesehen sein, dass der erste und/oder der zweite Verbundwerkstoff weiterhin einen oder mehrere Füllstoffe, gewählt aus Zirkon, Muscovit, Granit, Melanit und Feldspat, zu jeweils maximal 3,8 Gew.-%enthält.

Das heißt, dass im ersten oder im zweiten Verbundwerkstoff maximal 3,8 Gew.-% eines oder mehrerer der genannten Füllstoffe in der Summe enthalten ist.

Ersichtlich besteht damit eine Variationsmöglichkeit innerhalb der konkreten Zusammensetzungen des ersten und zweiten Verbundwerkstoffs, sodass durch entsprechende Wahl der Bestandteile auf entsprechende Anforderungen oder entsprechend einzustellende Eigenschaften reagiert werden kann.

Wie beschrieben, handelt es sich bei der Außenbeschichtung um eine relativ dünne Beschichtung, ihre Dicke sollte zwischen 0,1 -2,0 mm, insbesondere zwischen 0,2 - 1,5 mm liegen. Eine solche geringe Dicke ist ohne weiteres zu erhalten. Denn die Außenbeschichtung wird bevorzugt aufgespritzt respektive auflackiert, da der zweite Verbundwerkstoff zum Aufbringen ein Fluid ist, also spritzfähig ist. Durch dieses Aufspritzen kann sichergestellt werden, dass eine sehr gleichmäßige und sehr dünne Außenbeschichtung aufgetragen wird. Auch eine Tauchbeschichtung ist möglich.

Die Gesamtdicke aus Trägerschicht und Außenschicht sollte zwischen 8,0 - 26,0 mm liegen, das heißt, dass ersichtlich die Dicke der Trägerschicht ein Mehrfaches der Dicke der Außenbeschichtung ist.

Bei dem Gegenstand selbst handelt es sich wie bereits einleitend beschrieben bevorzugt um eine Badewanne, gleichermaßen kann es aber auch eine Duschwanne, eine Duschtasse, ein Waschbecken, ein Waschtisch oder ein WC sein.

Neben dem Sanitärgegenstand selbst betrifft die Erfindung ferner ein Verfahren zur Herstellung eines Sanitärgegenstands der vorstehend beschriebenen Art. Dieses Verfahren zeichnet sich in einer ersten Verfahrensalternative dadurch aus, dass auf einen Tragkörper aus einem ersten Verbundwerkstoff aus einer gefüllten Bindemittelmatrix enthaltend wenigstens einen Füllstoff in Form von Hohlglaskugeln zumindest abschnittsweise eine fluide Außenbeschichtung aus einem mit wenigstens einem Füllstoff gefüllten, jedoch keine Hohlglaskugeln enthaltenden polymeren Bindemittel aufgebracht wird, die anschließend unter Ausbildung eines zweiten Verbundwerkstoffs aushärtet. Hier wird also in einem ersten Schritt der Tragkörper hergestellt, der entsprechend ausgehärtet ist und anschließend in einem zweiten Schritt mit dem fluiden Material, das die Außenbeschichtung bildet, also dem fluiden zweiten Verbundwerkstoff belegt wird, bevorzugt durch Aufspritzen. Nach Aufbringen der Außenbeschichtung wird diese unter Bildung eines harten, zweiten Verbundwerkstoffs ausgehärtet.

Konkret zeichnet sich ein solches Verfahren durch folgende Schritte aus:
- Gießen einer polymeren Gießmasse aus einem gefüllten polymeren Bindemittel enthaltend wenigstens einen Füllstoff in Form von Hohlglaskugeln in eine Form und Aushärten der Gießmasse unter Bildung des Tragkörpers,
- Thermische und/oder mechanische Nachbehandlung des entformten Tragkörpers,
- Aufbringen einer weiteren polymeren, fluiden Masse aus einem mit wenigstens einem Füllstoff gefüllten, jedoch keine Hohlglaskugeln enthaltenden polymeren Bindemittel zur Bildung der Außenbeschichtung
- Thermische Nachbehandlung zum Aushärten der Außenbeschichtung und gegebenenfalls mechanische Nachbehandlung der Außenbeschichtung.

Erfindungsgemäß wird demzufolge zuerst der Tragkörper gegossen, indem eine polymere Gießmasse aus dem ersten Verbundwerkstoff, wie er vorstehend in unterschiedlichen Zusammensetzungen definiert wurde, in eine entsprechende Gießform gegossen wird. In der Form härtet die Gießmasse unter Bildung des ersten Verbundwerkstoffs respektive des Tragkörpers aus.

Im nächsten Schritt erfolgt, nach einer Entformung des Tragkörpers, eine thermische Nachbehandlung in Form eines Temperns, um etwaige Spannungen im Tragkörper zu reduzieren. Dem kann eine mechanische Nachbehandlung zur Oberflächenbearbeitung, insbesondere durch Schleifen, folgen, um die Oberfläche entsprechend fein auszuführen. Sowohl die thermische als auch die mechanische Nachbehandlung können vorgenommen werden, es ist aber auch denkbar, nur eine davon vorzunehmen, je nach Bedarf.

Im nächsten Schritt erfolgt sodann das Aufbringen der Außenbeschichtungsmasse, also einer polymeren, fluiden und damit spritzfähigen Masse aus einem mit wenigstens einem Füllstoff gefüllten, nun aber keine Hohlglaskugeln enthaltenden polymeren Bindemittel. Diese spritzfähige Masse, die über einen hinreichend hohen Gehalt an polymerem Bindemittel, üblicherweise ein Harz, entsprechend spritzfähig eingestellt ist, kann sehr gleichmäßig und dünn appliziert werden, sodass eine sehr homogene Außenbeschichtung erhalten werden kann. Dem Aufspritzen schließt sich eine thermische Nachbehandlung zum Aushärten der Außenbeschichtung an. Optional besteht die Möglichkeit, auch die Außenbeschichtung mechanisch feinst nachzubearbeiten, wobei diese mechanische Nachbehandlung primär dazu dient, die Außenbeschichtung zu mattieren.

Wie beschrieben, wird die Außenbeschichtung mittels einer fluiden Masse aufgebracht, was bevorzugt durch Aufspritzen geschieht. Alternativ ist es auch denkbar, die Masse durch Tauchen aufzubringen.

Neben dem vorstehend beschriebenen Verfahren betrifft die Erfindung ferner in einer zweiten Alternative ein weiteres Verfahren zur Herstellung eines Sanitärgegenstands der vorstehend beschriebenen Art. Dieses Verfahren zeichnet sich dadurch aus, dass in eine Form eine fluide Masse aus einem mit wenigstens einem Füllstoff gefüllten, jedoch keine Hohlglaskugeln enthaltenden polymeren Bindemittel zur Beschichtung der Formflächen eingebracht wird, welche Masse zur Bildung einer Außenbeschichtung zumindest erhärtet, wonach in die Form eine weitere, einen Füllstoff in Form von Hohlglaskugeln enthaltende polymere Gießmasse, die Außenbeschichtung hinterfüllend, eingebracht wird, wonach die Masse und die Gießmasse unter Bildung zweier Verbundwerkstoffe aushärten.

Bei dieser Verfahrensausgestaltung wird die eigentliche Gießform, in der letztlich der Tragkörper hergestellt wird, bereits vor dem Einbringen der den Tragkörper bildenden Gießmasse mit der fluiden Masse, die die Außenbeschichtung bildet, ausgegossen, das heißt, dass die Formflächen mit dieser fluiden Masse belegt werden. Die fluide Masse erhärtet zumindest, das heißt, sie geht in einen hinreichend festen Zustand über, muss jedoch nicht vollständig durchhärten. Sie muss lediglich so stabil sein, dass im nächsten Schritt die den Tragkörper bildende Gießmasse enthaltend die Hohlglaskugeln in die Form eingebracht werden kann, derart, dass diese Gießmasse die Außenbeschichtungsmasse hinterfüllt. Anschließend wird durch entsprechende Temperaturführung das Aushärten beider Massen erwirkt, wonach der fertige Gegenstand entformt wird.

In weiterer Konkretisierung dieses Verfahrens zeichnet es sich durch folgende Schritte aus:
- Aufspritzen der fluiden Masse aus einem mit wenigstens einem Füllstoff gefüllten, jedoch keine Hohlglaskugeln enthaltenden polymeren Bindemittel auf die Formflächen,
- Thermische Behandlung der Beschichtung derart, dass die Beschichtung unter Bildung einer Außenbeschichtung erhärtet,
- Gießen der weiteren, einen Füllstoff in Form von Hohlglaskugeln enthaltenden polymeren Gießmasse, die Außenbeschichtung hinterfüllend, in die Form,
- Aushärten der Masse und der Gießmasse,
- Thermische Nachbehandlung des Sanitärgegenstands und gegebenenfalls mechanische Nachbehandlung der Außenbeschichtung.

Nachfolgend werden drei Tabellen zu möglichen Zusammensetzungen des ersten und zweiten Verbundwerkstoffs angegeben, die sich jeweils auf die Gew.-%-Anteile des jeweiligen Bestandteils im ausgehärteten Produkt, also bei ausgehärtetem Verbundwerkstoff beziehen.

Die Tabelle I gibt die Zusammensetzung eines ersten Verbundwerkstoffs an, der von der Zusammensetzung bzw. den verwendeten Bestandteilen identisch zu dem zweiten Verbundwerkstoff, der in Tabelle III an gegeben ist, sein kann, da sich die zentralen, quasi zwingend beinhalteten Mindestbestandteile gleichen und lediglich in der jeweiligen Menge unterscheiden.

Tabelle II gibt eine Zusammensetzung für einen ersten Verbundwerkstoff an, der auch als "Filled Resin" bezeichnet werden kann, und der als Füllstoff neben den Hohlglaskugeln zumindest ein Metallcarbonat, hier Calciumcarbonat, enthält.

Tabelle III gibt schließlich eine Zusammensetzung für den die Außenbeschichtung bildenden zweiten Verbundwerkstoff an.

**Tabelle I: Erster Verbundwerkstoff, erste Alternative**

| Komponente | Erster Verbundwerkstoff |
|---|---|
| | Gew.-% |
| Bindemittel (Polyesterharz) | 34,60 - 48,70 |
| Füllstoffe (ATH, Glas, Quarz) | 47,50 - 61,80 |
| davon Hohlglaskugeln | 1,20 - 5,10* |
| Härter (MEKP) | 0 - 0,1 |
| Farbadditive (Pasten/ Pulver) | 2,40 - 2,75 |
| Andere Additive (z.B. Cobalt-Reaktionsbeschleuniger) | 0 - 0,1 |

**Tabelle II: Erster Verbundwerkstoff, zweite Alternative (Filled Resin)**

| Komponente | Erster Verbundwerkstoff |
|---|---|
| | Gew.-% |
| Bindemittel (Polyesterharz) | 19,5 - 48,3 |
| Füllstoffe 1: Calciumcarbonat | 45 - 70 |
| Füllstoff 2: Hohlglaskugeln (d50: 3 µm < x < 15 µm) | 0,5 - 9,5 |
| Füllstoff 3: ATH (d50: 3 µm < x < 150 µm) | 0 - 21 |
| Füllstoff 4: Quarz (d50: 3 µm < x < 250 µm) | 0 - 10,1 |
| Füllstoff 5: Dolomit (d50: 3 µm < x < 200 µm) | 0 - 7,3 |
| Füllstoff 6: andere Silikate, z. B. Zirkon, Muscovit, Granat, Melanit, Feldspat | 0 - 3,8 |
| Härter (z.B. MEKP) | 0 - 0,1 |
| Farbadditive (Pasten/ Pulver) | 0 - 5,0 |
| Andere Additive (z.B. Cobalt-Reaktionsbeschleuniger) | 0 - 0,1 |

**Tabelle III: Zweiter Verbundwerkstoff**

| Komponente | Zweiter Verbundwerkstoff Ausgehärtetes Endprodukt |
|---|---|
| | Gew.-% |
| Bindemittel (Polyesterharz) | 44,5 - 64,3 |
| Füllstoffe 1: ATH | 35 - 55 |
| Füllstoff 2: Quarz (d50: 3 µm < x < 250 µm) | 0 - 5,7 |
| Füllstoff 3: Dolomit (d50: 3 µm < x < 200 µm) | 0 - 7,3 |
| Füllstoff 4: andere Silikatgruppen | 0 - 3,8 |
| Härter (MEKP) | 0 - 0,1 |
| Farbadditive (Pasten/ Pulver) | 1,0 - 5,0 |
| Andere Additive (z.B. Cobalt-Reaktionsbeschleuniger) | 0 - 0,1 |

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Sanitärgegenstands in einer Teilansicht gemäß einer ersten Ausführungsform,
- Fig. 2: eine Prinzipdarstellung eines erfindungsgemäßen Sanitärgegenstands einer zweiten Ausführungsform in einer Teilansicht,
- Fig. 3: ein Flussdiagramm zur Erläuterung des erfindungsgemäßen Verfahrens einer ersten Ausführungsform, und
- Fig. 4: ein Flussdiagramm zur Erläuterung des erfindungsgemäßen Verfahrens einer zweiten Ausführungsform.

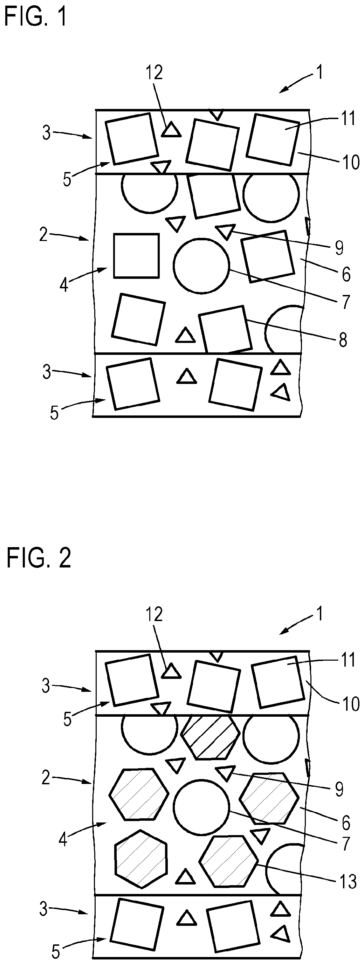

Fig. 1 zeigt eine Prinzipdarstellung eines erfindungsgemäßen Sanitärgegenstands 1, bei dem es sich beispielsweise um eine Badewanne handelt, wobei hier nur ein Ausschnitt gezeigt ist. In der Prinzipdarstellung ist ein Tragkörper 2 gezeigt, der beidseits mit einer Außenbeschichtung 3 versehen ist. Der Tragkörper 2 besteht aus einem ersten Verbundwerkstoff 4, während die beiden Außenbeschichtungen aus einem zweiten Verbundwerkstoff 5 bestehen.

Der erste Verbundwerkstoff 4 besteht aus einer gefüllten polymeren Bindemittelmatrix 6, bevorzugt einem Polyesterharz. In diesem sind als Füllstoff Hohlglaskugeln 7 enthalten, die der Gewichtsreduzierung dienen. Je nach zugegebener Menge an Hohlglaskugeln 7 kann das Gewicht bis zu ca. 15 % reduziert werden.

Ferner ist als weiterer Füllstoff ein Flammschutzmittel 8 hier in Form von Aluminiumtrihydrat (ATH) enthalten. Weiterhin ist, im gezeigten Beispiel vorgesehen, jedoch optional, ein Farbpigment 9, hier beispielsweise TiO₂, enthalten, das heißt, dass der Tragkörper 2 hierüber gefärbt ist.

Auch die Außenbeschichtungen 5 bestehen aus einer polymeren Bindemittelmatrix 10, bei der es sich wiederum um ein Polyesterharz handelt. In der Bindemittelmatrix 10 ist auch hier ein Flammschutzmittel 11 enthalten, wiederum Aluminiumtrihydrat. Des Weiteren sind auch hier Farbpigmente 12, auch hier wiederum TiO₂, enthalten.

Ersichtlich sind hier im ersten Verbundwerkstoff 4 und im zweiten Verbundwerkstoff 5 soweit als möglich identische Bestandteile enthalten, jedoch in unterschiedlicher Menge. Im gezeigten Beispiel unterscheiden sich die Verbundwerkstoffe 4, 5 lediglich darin, dass im ersten Verbundwerkstoff 4 die Hohlglaskugeln 7 enthalten sind, während diese im zweiten Verbundwerkstoff 5 nicht enthalten sind.

Die Schichtdicke der jeweiligen Außenbeschichtung 5 liegt im Bereich von 0,1 - 2,0 mm, vorzugsweise von 0,2 - 1,5 mm, während die Dicke des Tragkörpers 2 ein Vielfaches davon beträgt. Die Gesamtdicke aus Trägerschicht 2 und Außenschicht(en) 5 sollte zwischen 8,0 - 26,0 mm betragen.

Es besteht wie beschrieben die Möglichkeit, im ersten Verbundwerkstoff 4 auf Farbpigmente 9 zu verzichten, ihn also nicht durchzufärben. Dies ist möglich und führt zu einer weiteren Kostenreduktion, nachdem wie ausgeführt die Außenbeschichtung 5 entsprechende Farbpigmente 12 enthält.

Darüber hinaus besteht zusätzlich die Möglichkeit, weitere Füllstoffe zuzugeben, die das Flammschutzmittel 8, also das Aluminiumtrihydrat, das relativ kostenintensiv ist, ersetzen können, wie beispielsweise Quarz, Dolomit oder Ähnliches.

Fig. 2 zeigt eine weitere Prinzipdarstellung eines erfindungsgemäßen Sanitärgegenstands 1, beispielsweise wiederum ein Ausschnitt aus einer Badewanne. Der grundsätzliche Aufbau entspricht dem wie zu Fig. 1 beschrieben, das heißt, auch hier ist ein Tragkörper 2 sowie beidseitige Außenbeschichtungen 3 vorgesehen, wobei der Tragkörper 2 aus einem ersten Verbundwerkstoff 4 und die Außenbeschichtungen 3 aus einem zweiten Verbundwerkstoff 5 bestehen. Der zweite Verbundwerkstoff 5 besteht, wie auch beim Beispiel gemäß Fig. 1, aus einer polymeren Bindemittelmatrix 10, wiederum eine Polyesterharzmatrix, wobei in die Bindemittelmatrix 10 ein Füllstoff in Form eines Flammschutzmittels 11, wiederum Aluminiumtrihydrat, sowie auch Farbpigmente 12, wiederum beispielsweise TiO₂, eingebracht sind. Die Außenbeschichtung 5 entspricht also der aus Fig. 1.

Anders jedoch der Aufbau respektive die Zusammensetzung des ersten Verbundwerkstoffs 4. Dieser besteht wiederum aus einer polymeren Bindemittelmatrix 6, in die wiederum zu einem entsprechenden Anteil Hohlglaskugeln 7 eingebracht sind. Ebenfalls optional sind Farbpigmente 9, auch hier wiederum TiO₂, enthalten.

Bei dem hier gezeigten ersten Verbundwerkstoff 4 ist jedoch das relativ teure Flammschutzmittel ATH durch ein Metallcarbonat 13 in Form von Calciumcarbonat ersetzt, wobei vorliegend von einer vollständigen Ersetzung ausgegangen wird. Denkbar wäre es auch, dass ATH nur teilweise zu ersetzen. Das heißt, dass in der einfachsten Ausgestaltung der erste Verbundwerkstoff lediglich aus der Bindemittelmatrix 6 und den Hohlglaskugeln 7 sowie dem Metallcarbonat 13 besteht, aber weder Farbpigmente 9 noch andere Zuschläge, insbesondere in Form des Flammschutzmittels 8, enthalten sind.

Wie in beiden Fig. 1 und 2 ersichtlich ist, wurde aufgrund einer mechanischen Oberflächenbehandlung der beiden Außenflächen des Tragkörpers 2 oberflächennahe Hohlglaskugeln 7 geöffnet, also aufgeschliffen. Dies führt zu einer Mikroporosität am Tragkörper 2, die wiederum dazu führen könnte, dass der Tragkörper 2, wenn er nicht über die erfindungsgemäß vorgesehenen Außenbeschichtungen 5 versiegelt wäre, leichter zu verschmutzen neigt, da in die Mikroporen, also die offenen Hohlglaskörper 7, feinste Schmutzpartikel eindringen können.

In Folge der erfindungsgemäß aufgebrachten Außenbeschichtungen 5 an den bearbeiteten Oberflächen jedoch erfolgt eine vollständige Versiegelung mit einer von der grundsätzlichen Haptik vergleichbaren Außenbeschichtung, da auch diese aus einer Füllstoffe etc. enthaltenden Bindemittelmatrix besteht.

Die Fig. 1 und 2 sind lediglich Beispiele einer möglichen Zusammensetzung der ersten und zweiten Verbundwerkstoffe 4, 5. Es ist grundsätzlich möglich, dass die gezeigten Verbundwerkstoffe 4, 5 zusätzliche Füllstoffe wie beispielsweise Quarz, Dolomit, Zirkon, Muscovit, Granat, Melanit oder Feldspat enthalten. Diese Füllstoffe sind insbesondere im ersten Verbundwerkstoff 4 enthalten, da dieser, weil über die Außenbeschichtung 5 versiegelt, die wiederum die Außensichtfläche bildet, letztlich nicht zwingend die entsprechenden optischen und haptischen Eigenschaften aufweisen muss, wie sie von der Außenbeschichtung 5 gefordert werden. Daher ist es ohne Weiteres möglich, beispielsweise die Farbpigmente 5 durch einen anderen, billigen Füllstoff wie Quarz oder Dolomit zu ersetzen, da der Tragkörper 2 nicht durchgefärbt werden muss, da die Außenbeschichtung 5 gefärbt ist. Auch kann durch Zugabe eines oder mehrerer der vorstehend genannten zusätzlichen Füllstoffe auch das Flammschutzmittel in entsprechendem Umfang ersetzt werden, oder, wie beschrieben auch vollständig.

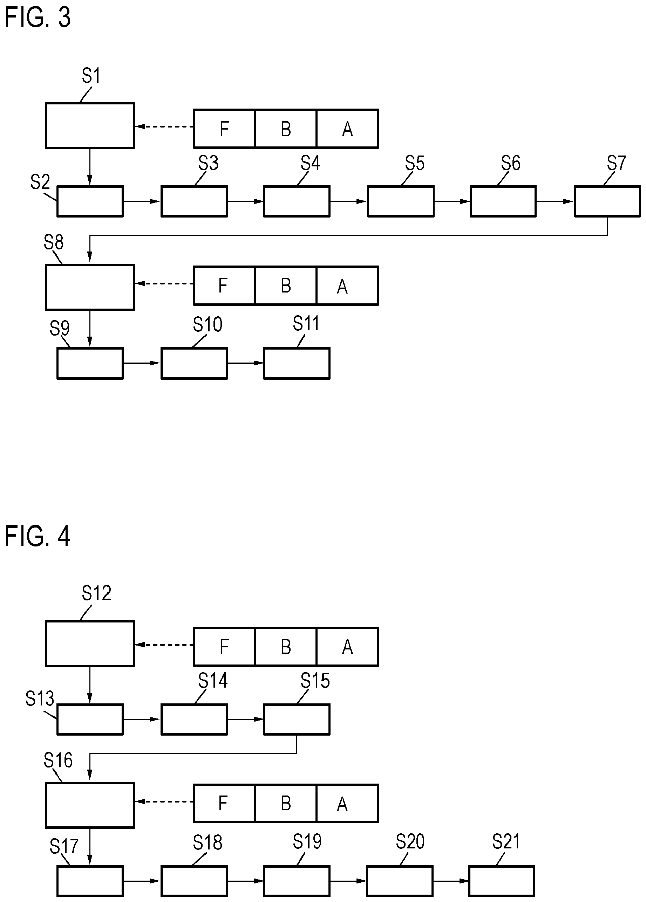

Fig. 3 zeigt in Form eines Flussdiagramms eine erste erfindungsgemäße Verfahrensvariante zur Herstellung eines erfindungsgemäßen Sanitärgegenstands.

Im Schritt S1 erfolgt die Aufbereitung der Gießmasse, die den ersten Verbundwerkstoff bildet. Hierzu werden das Bindemittel B, also das Polyesterharz, die Additive A wie beispielsweise der Härter (MEKP) sowie Farbpigmente, und der Füllstoff F, im vorliegenden Fall, da exemplarisch die Ausgestaltung gemäß Fig. 2 beschrieben wird, Calciumcarbonat, miteinander vermischt, um die entsprechende, hinreichend gießfähige Masse auszubilden. Als Füllstoff F werden Hohlglaskugeln verwendet.

Im Schritt S2 wird die Masse in die Form gegossen, wo sie im Schritt S3 geliert und härtet. Dies geschieht bei ca. 35° - 40° Celsius für die Dauer von 15 - 40 Minuten. Nach dem Härten erfolgt im Schritt S4 die Entformung des dann gegossenen, fertigen Tragkörpers. Er besteht aus dem ersten Verbundwerkstoff, der Hohlglaskugeln enthält.

Dieser wird im Schritt S5 bei einer Temperatur von 60° - 120° für 2 - 6 Stunden thermisch behandelt, also getempert, um etwaige Spannungen abzubauen. Hieran schließt sich im Schritt S6 eine mechanische Nachbearbeitung durch Schleifen der Oberfläche an, wobei es hierbei dazu kommt, dass, wie beschrieben, die oberflächennahen Hohlglaskugeln aufgeschliffen, also geöffnet werden können.

Im Schritt S7 erfolgt sodann die Vorbereitung des fertigen Tragkörpers für die nachfolgende Beschichtung mit der Außenbeschichtung.

Diese wird im Schritt S8 aufbereitet. Wiederum wird hierzu das Bindemittel B, das Polyesterharz, die Additive A wie der Härter und hier zwingend die Farbpigmente, und der Füllstoff F, im vorliegenden Fall das Flammschutzmittel Aluminiumtrihydrat, gemischt, um eine fluide, spritzfähige Masse zu bilden. Verglichen mit der im Schritt S1 hergestellten Masse ist der Bindemittelanteil der im Schritt S8 hergestellten Masse deutlich höher, um die Spritzfähigkeit einzustellen. Diese Masse enthält keine Hohlglaskugeln.

Im Schritt S9 wird die im Schritt S8 hergestellte fluide Masse auf die geschliffenen Oberflächen des Tragkörpers aufgespritzt, die Schichtdicke beträgt zwischen 0,1 - 2 mm, bezogen auf den fertigen ausgehärteten Zustand.

Nach dem Aufspritzen erfolgt im Schritt S10 zum Härten auch hier ein Temperierungsschritt bei 60° - 110° Celsius für 2 - 3 Stunden, das heißt, dass auch hier etwaige Schichtspannungen durch Tempern abgebaut werden. Es bildet sich der zweite, keine Hohlglaskugeln enthaltende Verbundwerkstoff.

Im Schritt S11, der jedoch optional ist, erfolgt ein Nachbearbeiten der aufgespritzten Beschichtungsoberfläche, um diese zu mattieren. Dieses Mattieren erfolgt mit einem höchstfeinen Schleifmittel, wobei hierbei keinerlei Problematik im Hinblick auf ein Aufschleifen der Hohlglaskugeln gegeben ist, wie beim mechanischen Schleifen des Tragkörpers, da die Außenbeschichtung 5 keine Hohlglaskugeln enthält.

Bei der Verfahrensvariante gemäß Fig. 3 wird also der Tragkörper als separates Bauteil in einer entsprechenden Gießform hergestellt, der anschließend mit der Außenbeschichtung belegt wird. Eine alternative Verfahrensvariante beschreibt Fig. 4, bei der beide Schichten respektive Teile in einer gemeinsamen Form appliziert respektive erzeugt werden.

Gemäß Fig. 4 wird im Schritt S12 zunächst die fluide Masse hergestellt, die zur Bildung der Außenbeschichtung 5 dient. Hierzu wird wiederum das Bindemittel B, Polyesterharz, sowie die Additive A wie Härter und Farbpigmente sowie der Füllstoff F in Form des Flammschutzmittels entsprechend vermischt, um eine spritzfähige Masse zu bilden.

Diese wird im Schritt S13 sodann auf die Formflächen der Gießform, in der anschließend der eigentliche Tragkörper gegossen wird, aufgespritzt, und zwar mit einer entsprechenden geringen Schichtstärke, um am Endprodukt die dünne Außenbeschichtung 5 zu bilden.

Im Schritt S14 wird die ausgespritzte Masse getempert, bei 60 - 110° für 0,5 - 3 Stunden, sodass diese zumindest erhärtet, ein vollständiges Durchhärten ist nicht unbedingt erforderlich.

Im Schritt S15 erfolgt eine Vorbereitung der Gießform für den nachfolgenden Schritt, in dem, wie nachfolgend beschrieben wird, die Außenbeschichtung hinterfüllt wird mit dem den Tragkörper bildenden ersten Verbundwerkstoff.

Im Schritt S16 wird die fluide Masse, die den ersten Verbundwerkstoff bildet, hergestellt. Hierzu wird wiederum das Bindemittel B, Polyesterharz, die Additive A wie Härter und Farbpigmente sowie auch hier erneut als Füllstoff F das Metallcarbonat, nämlich Calciumcarbonat, vermischt, um eine gießfähige Masse zu bilden, die anschließend im Schritt S17 in die Gießform gegossen wird. Hierbei kommt es zu einem vollständigen Hinterfüllen der erhärteten Außenbeschichtung aus dem zweiten Verbundwerkstoff.

An das Gießen schließt sich im Schritt S18 der Vorgang des Gelierens respektive Härtens an, der bei 35° - 40° Celsius für 15 - 40 Minuten erfolgt. Nach dem Aushärten dann beider Massen, also sowohl des Tragkörpers 2 als auch der Außenbeschichtung 5, wird der dann nahezu fertige Sanitärgegenstand im Schritt S19 entformt und im Schritt S20 bei 60° - 110° Celsius für 2 - 6 Stunden getempert, um etwaige Spannungen im Sanitärgegenstand abzubauen. Damit ist der Sanitärgegenstand letztlich fertig, es schließt sich lediglich noch eine optionale mechanische Oberflächenbehandlung im Schritt S21 an, wenn die Oberfläche mattiert werden soll.

Während im vorstehend beschriebenen Beispiel als Füllstoff zur Bildung der ersten Verbundwerkstoffmasse des Tragkörpers stets nur Calciumcarbonat verwendet wurde, besteht die Möglichkeit, anstatt dessen auch ATH, also das Flammschutzmittel, zu verwenden, das heißt, dass letztlich der Aufbau des ersten und zweiten Verbundwerkstoffs von den Bestandteilen her relativ ähnlich ist. Daneben besteht aber natürlich auch die Möglichkeit, auch hier andere weitere Füllstoffe wie Quarz, Dolomit und Ähnliches zuzugeben.

## Patentansprüche

1. Sanitärgegenstand, mit einem Tragkörper (2) und einer zumindest abschnittsweise auf diesen aufgebrachten, die Außenseite des Sanitärgegenstands bildende Außenbeschichtung (3), wobei der Tragkörper (2) aus einem ersten Verbundwerkstoff (4) aus einer gefüllten polymeren Bindemittelmatrix (6) enthaltend wenigstens einen Füllstoff in Form von Hohlglaskugeln (7) und die Außenbeschichtung (3) aus einem zweiten Verbundwerkstoff (5) aus einer mit wenigstens einem Füllstoff gefüllten polymeren Bindemittelmatrix (10), die keine Hohlglaskugeln enthält, besteht.

2. Sanitärgegenstand nach Anspruch 1, **dadurch gekennzeichnet, dass** die Bestandteile des ersten Verbundwerkstoffs (4) und die Bestandteile des zweiten Verbundwerkstoffs (5), bis auf die Hohlglaskugeln (7), die gleichen sind, oder dass sich die Bestandteile des ersten Verbundwerkstoffs (4) und die Bestandteile des zweiten Verbundwerkstoffs (5), neben des Hohlglaskugeln (7), zumindest zum Teil unterscheiden.

3. Sanitärgegenstand nach Anspruch 1 oder 2, **dadurch gekennzeichnet, dass** der zweite Verbundwerkstoff (5) als Füllstoff wenigstens ein Flammschutzmittel (11), insbesondere Aluminiumtrihydrat enthält.

4. Sanitärgegenstand nach einem der vorangehenden Ansprüche, **dadurch gekennzeichnet, dass** der zweite Verbundwerkstoff (5) wenigstens ein Farbadditiv (12), insbesondere ein organisches Pigment oder ein anorganisches Pigment enthält.

5. Sanitärgegenstand nach Anspruch 4, **dadurch gekennzeichnet, dass** das anorganische Pigment Titandioxid ist.

6. Sanitärgegenstand nach einem der vorangehenden Ansprüche, **dadurch gekennzeichnet, dass** der zweite Verbundwerkstoff (5) enthält (in Gew.% des ausgehärteten Verbundwerkstoffs):
| | |
|---|---|
| Polymeres Bindemittel: | 44,0 - 65,0 |
| Flammschutzmittel: | 35,0 - 55,0 |
| Farbadditiv: | 1,0 - 5,0 |

7. Sanitärgegenstand nach einem der vorangehenden Ansprüche, **dadurch gekennzeichnet, dass** der erste Verbundwerkstoff (4) enthält (in Gew.% des ausgehärteten Verbundwerkstoffs):
| | |
|---|---|
| Polymeres Bindemittel: | 34,0 - 49,0 |
| Flammschutzmittel + ggf. Quarz: | 47,0 - 62,0 |
| Hohlglaskugeln: | 1,0 - 5,1 |
| Farbadditiv: | 2,4 - 2,8 |

8. Sanitärgegenstand nach einem der Ansprüche 1 bis 6, **dadurch gekennzeichnet, dass** der erste Verbundwerkstoff (4) weiterhin als Füllstoff ein Metallcarbonat (13), insbesondere Calciumcarbonat enthält.

9. Sanitärgegenstand nach einem der vorangehenden Ansprüche, **dadurch gekennzeichnet, dass** der erste Verbundwerkstoff (4) enthält (in Gew.% des ausgehärteten Verbundwerkstoffs):
| | |
|---|---|
| Polymeres Bindemittel: | 19,0 - 50,0 |
| Metallcarbonat: | 45,0 - 70,0 |
| Hohlglaskugeln: | 0,5 - 9,5 |

10. Sanitärgegenstand nach Anspruch 8 oder 9, **dadurch gekennzeichnet, dass** der erste Verbundwerkstoff (4) als Füllstoff wenigstens ein Flammschutzmittel (8), insbesondere Aluminiumtrihydrat zu maximal 21 Gew.% enthält.

11. Sanitärgegenstand nach einem der Ansprüche 8 bis 10, **dadurch gekennzeichnet, dass** der erste Verbundwerkstoff (4) wenigstens ein Farbadditiv (9), insbesondere ein organisches Pigment oder ein anorganisches Pigment zu maximal 5,0 Gew.% enthält.

12. Sanitärgegenstand nach Anspruch 11, **dadurch gekennzeichnet, dass** das anorganische Pigment Titandioxid ist

13. Sanitärgegenstand nach einem der vorangehenden Ansprüche, ausgenommen Anspruch 6, **dadurch gekennzeichnet, dass** der erste und/oder zweite Verbundwerkstoff (4, 5) weiterhin als Füllstoff Quarz enthält, wobei der erste Verbundwerkstoff Quarz zu maximal 10,1 Gew.% und der zweite Verbundwerkstoff Quarz zu maximal 5,7 Gew.% enthält.

14. Sanitärgegenstand nach einem der vorangehenden Ansprüche, **dadurch gekennzeichnet, dass** der erste und/oder der zweite Verbundwerkstoff (4, 5) weiterhin als Füllstoff Dolomit enthält, wobei der erste und der zweite Verbundwerkstoff (4, 5) Dolomit jeweils zu maximal 7,3 Gew.% enthält.

15. Sanitärgegenstand nach einem der vorangehenden Ansprüche, **dadurch gekennzeichnet, dass** der erste und/oder der zweite Verbundwerkstoff (4, 5) weiterhin einen oder mehrere Füllstoffe gewählt aus Zirkon, Muscovit, Granat, Melanit und Feldspat zu jeweils maximal 3,8 Gew.% enthält.

16. Sanitärgegenstand nach einem der vorangehenden Ansprüche, **dadurch gekennzeichnet, dass** die Dicke der Außenbeschichtung (3) zwischen 0,1 - 2,0 mm, insbesondere zwischen 0,2 - 1,5 mm beträgt.

17. Sanitärgegenstand nach einem der vorangehenden Ansprüche, **dadurch gekennzeichnet, dass** die Gesamtdicke aus Tragkörper (2) und Außenbeschichtung (3) zwischen 8,0 - 26,0 mm beträgt.

18. Sanitärgegenstand nach einem der vorangehenden Ansprüche, **dadurch gekennzeichnet, dass** der Gegenstand eine Badewanne, eine Duschwanne, eine Duschtasse, ein Waschbecken, ein Waschtisch oder ein WC ist.

19. Verfahren zur Herstellung eines Sanitärgegenstands nach einem der vorangehenden Ansprüche, **dadurch gekennzeichnet, dass** auf einen Tragkörper (2) aus einem ersten Verbundwerkstoff (3) aus einer gefüllten polymeren Bindemittelmatrix (6) enthaltend wenigstens einen Füllstoff in Form von Hohlglaskugeln (7) zumindest abschnittsweise eine fluide Außenbeschichtung (5) aus einem mit wenigstens einem Füllstoff gefüllten, jedoch keine Hohlglaskugeln (7) enthaltenden polymeren Bindemittel (10) aufgebracht wird, die anschließend unter Bildung eines zweiten Verbundwerkstoffs (5) aushärtet.

20. Verfahren nach Anspruch 19, mit folgenden Schritten:
- Gießen einer polymeren Gießmasse aus einem gefüllten polymeren Bindemittel enthaltend wenigstens einen Füllstoff in Form von Hohlglaskugeln (7) in eine Form und Aushärten der Gießmasse unter Bildung des Tragkörpers (2),
- Thermische und/oder mechanische Nachbehandlung des entformten Tragkörpers (2),
- Aufbringen einer weiteren polymeren, fluiden Masse aus einem mit wenigstens einem Füllstoff gefüllten, jedoch keine Hohlglaskugeln (7) enthaltenden polymeren Bindemittel zur Bildung der Außenbeschichtung (5),
- Thermisch Nachbehandlung zum Aushärten der Außenbeschichtung (5) und gegebenenfalls mechanische Nachbehandlung der Außenbeschichtung (5).

21. Verfahren nach Anspruch 19 oder 20, **dadurch gekennzeichnet, dass** die fluide Masse ausgespritzt oder durch Tauchen aufgebracht wird.

22. Verfahren zur Herstellung eines Sanitärgegenstands nach einem der vorangehenden Ansprüche, **dadurch gekennzeichnet, dass** in eine Form eine fluide Masse aus einem mit wenigstens einem Füllstoff gefüllten, jedoch keine Hohlglaskugeln (7) enthaltenden polymeren Bindemittel zur Beschichtung der Formflächen eingebracht wird, welche Masse zur Bildung einer Außenbeschichtung (5) zumindest erhärtet, wonach in die Form eine weitere, einen Füllstoff in Form von Hohlglaskugeln (7) enthaltende polymere Gießmasse, die Außenbeschichtung (5) hinterfüllend, eingebracht wird, wonach die Masse und die Gießmasse unter Bildung zweier Verbundwerkstoffe (4, 5) aushärten.

23. Verfahren nach Anspruch 22, mit folgenden Schritten:
- Aufspritzen der fluiden Masse aus einem mit wenigstens einem Füllstoff gefüllten, jedoch keine Hohlglaskugeln (7) enthaltenden polymeren Bindemittel auf die Formflächen,
- Thermische Behandlung der Beschichtung derart, dass die Beschichtung unter Bildung einer Außenbeschichtung (5) erhärtet,
- Gießen der weiteren, einen Füllstoff in Form von Hohlglaskugeln (7) enthaltende polymere Gießmasse, die Außenbeschichtung (5) hinterfüllend, in die Form,
- Aushärten der Masse und der Gießmasse,
- Thermische Nachbehandlung des Sanitärgegenstands und gegebenenfalls mechanische Nachbehandlung der Außenbeschichtung (5).
